# EUROPÄISCHE PATENTSCHRIFT

(11) **EP 2 390 126 B1**
(45) Veröffentlichungstag und Bekanntmachung des Hinweises auf die Patenterteilung: **04.12.2013**
(21) Anmeldenummer: 10164269.2
(22) Anmeldetag: 28.05.2010
(51) Int. Cl.: B60J 1/16

(54) **Führung für eine Schiebefensterbaugruppe mit nicht parallelen Führungsschienen**
Guide for a sliding window assembly with non parallel guide rails
Guidage pour ensemble de fenêtre coulissante doté de rails non parallèles

(43) Veröffentlichungstag der Anmeldung: 30.11.2011
(73) Patentinhaber: DURA Automotive Body & Glass Systems GmbH, 58840 Plettenberg (DE)
(72) Erfinder: Schulte, Martin, 58802 Balve (DE); Kraus, Jürgen, 58802 Balve (DE)
(74) Vertreter: Tersteegen, Felix

(56) Entgegenhaltungen:
- EP-A2- 1 747 927
- DE-A1- 10 331 269
- DE-B3-102004 061 567
- FR-A1- 2 829 971

## Beschreibung

Die Erfindung betrifft eine Schiebefensterführung für eine Schiebefensterbaugruppe eines Kraftfahrzeugs, insbesondere eines Personenkraftwagens, mit nicht parallelen Führungen, umfassend eine Führungsschiene und eine Haltervorrichtung, mit der die Führungsschiene über eine Ausgleichslagerung derart beweglich verbunden ist, dass die Ausgleichslagerung eine sich beim Verschieben des Schiebefensters einstellende Verlagerung der Führungsschiene auszugleichen vermag.

Schiebefenster mit nicht parallelen Führungsschienen dieser Art sind aus dem für die Anmelderin erteilten Patent DE 10 2004 061 567 B3 bekannt. Die Führungsschienen weisen eine Ausgleichseinrichtung in Form einer mehrteilig ausgebildeten Konstruktion auf, bei der eine bewegliche Führungsschiene verschwenkbar an einem Führungshalter gelagert und über ein zwischen Führungsschiene und Führungshalter wirkendes, federndes erstes Ausgleichselement gegen die Schiebefensterkante angestellt ist. Außerdem ist ein zweites Ausgleichselement vorgesehen, das den trotz des sich über den Verschiebeweg ändernden Abstands zwischen Führungsschiene und Schiebefensteraußenkante im hinteren Schiebefensterbereich den Eingriff der am Schiebefenster vorgesehenen Führungselemente in die Führungsnut der Führungsschiene sicherstellt.

Eine Führung für Schiebefenster mit nicht parallelen Führungsschienen, bei der sich die Führungsschiene gegenüber einer Haltevorrichtung verlagern kann, ist außerdem aus der EP 1 747 927 A2 bekannt. Die darin beschriebene Ausgestaltung ermöglicht allerdings lediglich eine Verlagerung der Führungsschienen derart, dass diese sich beim Öffnen des Schiebefensters im Ganzen parallel nach unten bewegt. Bei Öffnungsstellung des Schiebefensters ist die vom Schiebefenster freigegebene Öffnung durch die nach unten verlagerte Führungsschiene teilverdeckt. Zudem erfordert die in der EP 1 747 927 A2 offenbarte konstruktive Lösung eine Bauhöhe, welche die Durchsichtfläche insbesondere bei geöffnetem Schiebefenster unnötig verringert.

Schiebefensterbaugruppen mit nicht parallelen Führungsschienen sollen insbesondere dann eingesetzt werden, wenn diejenige Öffnung in der Karosserie eines Fahrzeugs, in der die Schiebefensterbaugruppe aufgenommen werden soll, nicht parallel verlaufende obere und untere Begrenzungen aufweist. Würden in einem solchen Fall bei einer Schiebefensterbaugruppe die Führungsschienen dennoch parallel verlaufen, müsste sich deren Abstand und damit auch die Höhe des Schiebefensters stets an dem geringsten Abstand zwischen oberer und unterer Begrenzung orientieren. Dies steht dem Bestreben entgegen, mit einem Fenster stets die maximal mögliche Durchsichtfläche zu erreichen. Außerdem würden in einem solchen Fall die Führungsschienen und die am Fahrzeugäußeren oder Fahrzeuginneren sichtbaren, den optischen Eindruck des Fahrzeugs ganz wesentlich mitprägenden Karosserielinien nicht parallel oder zumindest nicht in optisch gefälliger Weise zu den Führungsschienen verlaufen. Es entstünde eine Linienführung mit auseinander laufenden Körper- und Sichtkanten. Dies gilt insbesondere auch für den auf der Scheibeninnenseite üblicherweise befindlichen von Innen und Außen sichtbaren Schwarzdruck, der der Außenkontur des Fensters und dem der Karosserie folgt und mit dem zum Beispiel Klebenähte optisch verdeckt werden.

Die Erfindung macht es sich zur Aufgabe, das Zusammenwirken von Führungsschiene und Führungshalter über das in der DE 10 2004 061 567 B3 beschriebene Maß zu verbessern. Insbesondere soll die Lagerung der beweglich in der Haltevorrichtung gehaltenen Führungsschiene im Hinblick auf die Stabilität der Konstruktion verbessert werden, unter anderem mit dem Ziel, Klappergeräuschen, die durch fahrdynamische Effekte wie Eigenfrequenzanregung oder unstete Windkräfte entstehen können, entgegenzuwirken.

Weiter soll die Art und Weise des Zusammenwirkens von beweglichen und feststehenden Bauteilen unter Berücksichtigung von fertigungstechnischen Gesichtspunkten und von Montageaspekten gezielt verbessert werden. Dabei soll die Herstellung der einzelnen Bauteile unter Verwendung von Standardverfahren möglich sein.

Es soll darüber hinaus sichergestellt sein, dass das Schiebefenster sicher in der Führungsschiene und die Führungsschiene sicher und möglichst spielfrei in der Haltevorrichtung gehalten ist und die zueinander beweglichen Bauteile über die gesamte Betriebsdauer robust zusammenwirken.

Außerdem soll eine Ausgestaltung gefunden werden, bei der trotz der sich zueinander scherenartig bewegenden Bauteile die potentielle Gefahr, dass Fremdteile zwischen die einzelnen Bauteile eindringen und diese funktionshindernd verklemmen, minimiert ist.

Zur Lösung sieht die Erfindung vor, dass die Ausgleichslagerung zumindest ein schwenkbewegliches, insbesondere ein schwenkbewegliches, Zwischenglied umfasst, das schwenkbar an der Führungsschiene und der Haltervorrichtung angelenkt ist und die Führungsschiene derart stabilisierend mit der Haltevorrichtung verbindet, dass es auf die Führungsschiene wirkende Querkräfte und/oder Torsionskräfte wirksam aufzunehmen vermag.

Durch diese Ausgestaltung stellt das Zwischenglied sicher, dass die Freiheitsgrade der Führungsschiene bis auf die gewollt zugelassene Verlagerung bei Betätigung des Schiebefensters stabilitätsfördernd eingeschränkt sind. Das Schiebefenster ist über die Führungsschiene somit auch bei auftretenden Querkräften seitlich sicher geführt und eine Verdrehung der Führungsschiene um ihre Längsachse, die bei außermittiger Krafteinleitung auftreten kann, ist verhindert. Ein solches Zwischenglied lässt sich als einfaches Blechformteil aus Metall in der benötigten Stabilität und Maßgenauigkeit günstig herstellen.

Das Zwischenglied ist bevorzugt als Schwenkbügel ausgebildet, der an der Haltevorrichtung und der Führungsschiene angelenkt ist. Weiter vorteilhaft ist es, wenn das Zwischenglied derart an Haltevorrichtung und Führungsschiene angelenkt ist, dass es gegenüber einem der Bauteile, bevorzugt gegenüber der Haltevorrichtung, rein schwenkbar und gegenüber dem jeweils anderen Bauteil, also bevorzugt gegenüber der Führungsschiene, schwenkbar und verschieblich ist.

Um die die mit der Verlagerung der Führungsschiene gegenüber der Haltevorrichtung einhergehende Schwenkbewegung des Zwischenglieds zu steuern greifen Zwischenglied und das Bauteil, demgegenüber das Zwischenglied schwenkverschieblich ist, über Steuermittel, insbesondere über eine Steuernut und einen Steuerbolzen, inein-ander. Der Begriff Steuerbolzen umfasst dabei jegliche Art von Bolzen, Stiften, Nocken, Domen oder sonstigen Fortsätzen, die geeignet sind, in eine Nut, also eine sich längliche erstreckende Bauteilvertiefung, einzugreifen und darin geführt werden. Hierdurch kann zum einen die maximale Verlagerung der Führungsschiene gegenüber der Haltevorrichtung wirksam begrenzt werden, und zum anderen kann über ein elastisches Vorspannelement, beispielsweise eine Feder, die Führungsschiene gezielt gegen die Haltevorrichtung oder aber gegen das Schiebefenster angestellt werden, beispielsweise um die Verlagerungsbewegung zu unterstützen und/oder um eventuell vorhandenes Spiel zur Vermeidung einer ungewollten Geräuschentwicklung zu minimieren. Das Vorspannelement kann unmittelbar zwischen Führungsschiene und Haltevorrichtung wirken und/oder die Vorspannung kann dadurch realisiert werden, dass das Vorspannelement unmittelbar auf das Zwischenelement wirkt, so dass die Vorspannkraft über das Zwischenelement übertragen wird.

Um bei der Montage das Einfädeln der Steuermittel ineinander, also insbesondere das Einfädeln des Steuerbolzens in die Steuernut, zu ermöglichen, ist eine Montagenut vorgesehen, die in die Steuernut überführt ist. Die Montagenut durchbricht die Außenkontur des Bauteils, in dem sie vorgesehen ist, randseitig, so dass sie von außen zugänglich ist. Diese Ausgestaltung vereinfacht die Montage der Baugruppe, denn das Zwischenglied kann so in einfacher Weise in die Steuernut eingehängt werden.

Das Zwischenglied ist bevorzugt beidseitig an der Führungsschiene, insbesondere beidseitig einer in der Führungsschiene vorgesehenen Führungsnut an der Führungsschiene angelenkt. Es ist außerdem vorteilhaft, wenn das Zwischenglied die Führungsschiene außenseitig umgreift. Es können zwei voneinander unabhängige, gleichartige Zwischenglieder vorgesehen sein. Aus Stabilitätsgründen, insbesondere zum Erzielen einer hohen Verwindungssteifigkeit der Baugruppe, ist es allerdings von Vorteil, wenn das Zwischenglied zumindest zum Teil einen U-förmigen Querschnitt aufweist und die zwei die Führungsschiene umgreifenden Schenkel, von denen jeweils einer auf einer der beiden Seiten der Führungsschiene angelenkt ist, über den U-förmigen Querschnittsverlauf miteinander verbunden sind.

Die U-förmige Ausgestaltung des Querschnitts des Zwischenglieds ermöglicht außerdem, dass sich Zwischenglied, Führungsschiene und Haltevorrichtung Platz sparend und optisch vorteilhaftineinander legen können.

Bei der Ausgestaltung der Schiebefensterführung ist zu bedenken, dass es bei Verlagerung der Führungsschiene relativ zur Haltevorrichtung je nach Winkelausrichtung der Führungen zueinander und je nach Verschiebeweg des Schiebefensters dazu kommen kann, dass die Führungsschiene sich derart weit zur Haltevorrichtung verlagert, dass zwischen Haltevorrichtung und Führungsschiene ein Spalt entsteht. Um das Eindringen von Fremdkörpern in diesen Spalt zu verhindern, greifen Führungsschiene und Haltevorrichtung bevorzugt derart weit ineinander, dass auch bei maximaler Verlagerung der Führungsschiene relativ zur Haltevorrichtung die Führungsschiene von der Haltevorrichtung teilverdeckt ist. Damit ist die Bildung eines Spaltes zwischen diesen beiden Bauteilen sicherverhindert.

Besonders einfach realisieren lässt sich diese Vorgabe, wenn die Haltevorrichtung die Führungsschiene außenseitig, im Bezug auf das Fahrzeug zum Fahrzeuginneren hin, mit einem Profilschenkel derart umgreift und die Führungsschiene selbst bei maximalem Öffnungsmaß noch zumindest teilweise in die Haltevorrichtung eintaucht.

Es kann außerdem vorgesehen sein, dass die Querschnitte der Haltevorrichtung und der Führungsschiene zumindest abschnittsweise derart aufeinander abgestimmt sind, dass die Führungsschiene im eingeschwenkten Zustand spielfrei von der Haltevorrichtung gehalten bzw. darin aufgenommen ist. Dies kann dadurch erreicht werden, dass die Haltevorrichtung innenseitig eine sich in Einschwenkrichtung verjüngende Führungsschienenaufnahme aufweist, in die die Führungsschiene beim Einschwenkvorgang eintaucht, bis die Führungsschiene mit der Haltevorrichtung über die Führungsschienenaufnahme in Berührung steht.

Bevorzugt weißt die Führungsschiene hierzu an einer oder mehreren geeigneten Stellen eine zur jeweiligen Aufnahme korrespondierende Außenkontur auf, so dass Führungsschiene und Haltevorrichtung im Bereich der Aufnahme in Punkt- oder Linienkontakt miteinander stehen oder zumindest im Bereich der Aufnahme flächig aneinander anliegen. Im eingeschwenkten Zustand kommen Führungsschiene und Haltevorrichtung also bevorzugt zumindest partiell in spielfreie Anlage, so dass Klappergeräusche durch Fahrdynamische Effekte und Eigenfrequenzen verhindert werden können. Dies kann auch dadurch erreicht werden, dass an den jeweiligen Stellen die Führungsschiene außenseitig und/oder die Haltevorrichtung im Bereich der Aufnahme innenseitig mit rippenartigen Vorsprüngen versehen sind, die sich im eingeschwenkten Zustand an das jeweils andere Bauteil anlegen. Dieses nur partielle Anlegen der Bauteile aneinander hat insbesondere Vorteil, dass die Gesamtfläche, mit der die Führungsschienenaußenseite und die Haltevorrichtungsinnenseite aneinander anliegen, geringer ausfällt und einem Verklemmen der Führungsschiene in der Haltervorrichtung so wirksam entgegengewirktwerden kann.

Zusätzlich oder alternativ zu einem auf das Zwischenglied wirkenden Vorspannelement kann ein Vorspannelement, insbesondere eine Feder, unmittelbar zwischen Führungsschiene und Haltevorrichtung wirken. Das Vorspannelement wirkt dabei als Andrückfeder und stellt so sicher, dass die Führungsschiene gegen das Schiebefenster angestellt ist und definiert ausschwenkt. Die am Schiebefenster vorzusehenden Führungselemente können so störungsfrei und spielfrei mit der Führungsschiene zusammenwirken. Dabei befindet sich das Vorspannelement bevorzugt im mittleren Bereich der Führungsschiene.

Als am Schiebefenster vorzusehende Führungselemente kommen Führungsstifte in Betracht, die in einer in der beweglichen Scheibe oder in einem mit der beweglichen Scheibe verbundenen Rahmenteil randseitig eingelassenen Hülse kolbenartig aufgenommen und durch eine Feder gegen die Führungsschiene vorgespannt sind. Bei Verschieben des Schiebefensters können die Führungselemente sich dem sich ändernden Abstand zwischen Führungsschiene und Schiebefensterkante durch mehr oder weniger weites hervorstehen des Führungsstiftes anpassen, so dass sie stets optimal mit der Führungsschiene zusammenwirken.

Das Schiebefenster kann entweder auf herkömmliche Weise manuell betätigbar sein, oder es kann fremdkraftbetrieben, insbesondere elektromotorisch angetrieben sein.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
Fig. 1 eine Schiebefensterbaugruppe mit nicht parallelen Führungen mit dem Schiebefenster in Schließstellung,
Fig. 2 die Schiebefensterbaugruppe aus Figur 1 mit dem Schiebefenster in Öffnungsstellung,
Fig. 3 den vorderen Bereich der in Figur 1 und Figur 2 dargestellten Führung im Detail (Einzelheit A aus Figur 2),
Fig. 4 den vorderen Bereich der in Figur 1 bis Figur 3 dargestellten Führung im Schnitt (Schnittansicht gemäß Schnittlinie B-B aus Figur 3),
Fig. 5 den mittleren Bereich der in Figur 1 und Figur 2 dargestellten Führung im Schnitt (Schnittansicht gemäß Schnittlinie C-C aus Figur 1),
Fig. 6 den hinteren Bereich der in Figur 1 und Figur 2 dargestellten Führung im Schnitt (Schnittansicht gemäß Schnittlinie D-D aus Figur 1),
Fig. 7a ein im hinteren Bereich des Schiebefensters angeordnetes Führungselement bei Schließstellung des Schiebefensters, und
Fig. 7b das in Figur 7a gezeigte Führungselement bei Öffnungsstellung des Schiebefensters.

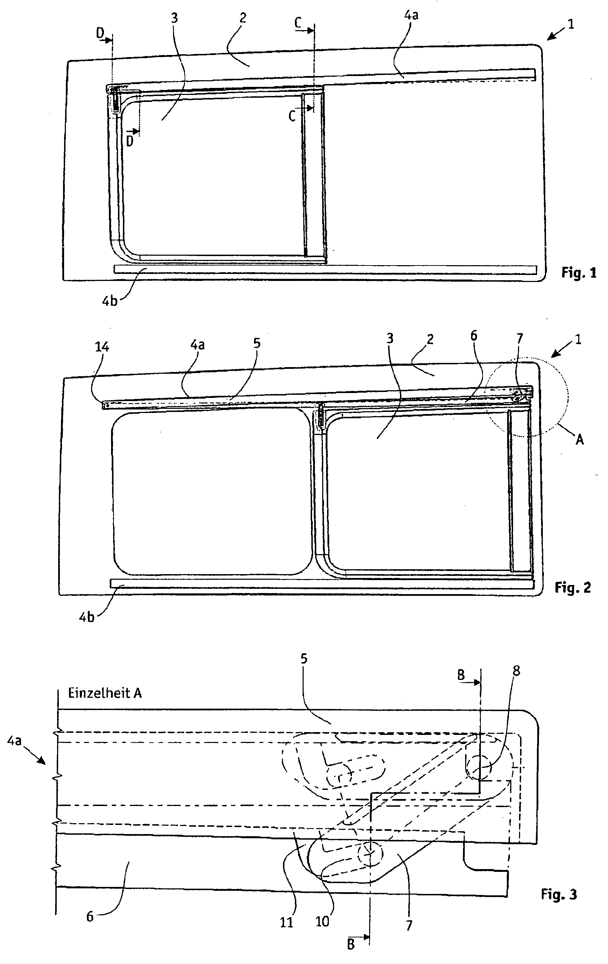

In Figur 1 und Figur 2 ist eine Schiebefensterbaugruppe 1 dargestellt, die eine feststehende Fensterplatte 2 und ein bewegliches Schiebefenster 3 umfasst. Das Schiebefenster 3 ist in einer oberen Führung 4a und einer unteren Führung 4b geführt, die nicht parallel zueinander verlaufen. Die obere Führung 4a weist neben einer fest mit der Fensterplatte 2 verbundenen Haltevorrichtung 5 eine über eine Ausgleichslagerung beweglich zur Haltervorrichtung 5 gelagerte Führungsschiene 6 auf.

Das Schiebefenster 3 befindet sich in Figur 1 in Schließstellung und in Figur 2 in Öffnungsstellung, in der es eine Öffnung in der Fensterplatte 2 freigibt. Der Vergleich von Figur 1 und Figur 2 zeigt, dass sich der Abstand der oberen Schiebefensterkante gegenüber der Haltervorrichtung 5 der oberen Führung 4a über den Verschiebeweg des Schiebefensters 3 verändert. Je weiter das Schiebefenster geöffnet wird, desto größer wird dieser Abstand. Diese Abstandsänderung wird dadurch ausgeglichen, dass die schwenkbeweglich zur Haltervorrichtung 5 gelagerte Führungsschiene 6 der oberen Führung 4a beim Verschieben des Schiebefensters 3 aus der Haltevorrichtung 5 herausschwenkt, sich also relativ zur Haltevorrichtung 5 verlagert. Die untere Führung 4b des Schiebefensters 3 ist hingegen als klassische Führung ausgebildet, wie sie dem Fachmann hinlänglich bekanntist.

Die in den Figuren beispielhaft gezeigte Ausführungsform, bei der die obere Führung 4a die Nicht-Parallelität der Führungsschienen ausgleicht, ist für die Realisierung der Erfindung nicht zwingend ist. Es ist ebenso gut möglich, dass die untere Führung 4b oder sogar die untere und die obere Führung ausgebildet sind, die Ausgleichsfunktion zu übernehmen.

Soweit nachfolgend von "vorne" bzw. "hinten" oder von "vorderen" bzw. von "hinteren" Bauelementen die Rede ist, beziehen sich diese Begrifflichkeiten auf die in Figur 1 und Figur 2 durch den Pfeil angedeutete Fahrtrichtung und die dort beispielhaft dargestellte Ausführungsform, bei der sich der Abstand der Außenkanten der feststehenden Fensterplatte und der Abstand der oberen und unteren Führung in Fahrtrichtung erweitern und bei der das Schiebefenster in Fahrrichtung zu verschieben ist, um von der Schließ-in die Öffnungsstellung überführt zu werden. Im Hinblick auf die Erfindung ist dies selbstverständlich nicht einschränkend zu verstehen. Die Erfindung lässt sich ebenso gut bei hiervon abweichenden Ausgestaltungen realisieren.

Bei Schiebefensterbaugruppen, wie sie typischerweise zum Einsatz kommen, beträgt der Abstand zwischen der unteren Führung 4b und der oberen Führung 4a je nach Fahrzeug regelmäßig zwischen etwa 400 mm und 500 mm. Bei Nicht-Parallelität der Führungen und einem typischen Öffnungswinkel von etwa 1,5° bis 3° und einer Gesamtlänge der Führungen von etwa 1000 mm beträgt die durch eine Verlagerung der Führungsschiene auszugleichende Abstandsänderung etwa 13 mm bis 26 mm, wenn man davon ausgeht, dass das bewegliche Schiebefenster in Schließstellung mit den vorderen Führungselementen etwa in der Mitte der Führung angreift.

Insbesondere wenn die Führungsschiene 6, die bevorzugt aus Kunststoff hergestellt ist, aus der Haltevorrichtung 5 nach Öffnen des Schiebefensters 3 herausgeschwenkt ist, gilt es, die das Schiebefenster 3 führende Führungsschiene 6 so stabil und robust wie möglich über die Haltevorrichtung 5 mit dem Fahrzeug zu verbinden. Ansonsten besteht die Gefahr, dass das Schiebefenster 3 nicht ausreichend stabil gehalten ist und durch potentiell auftretende Querkräfte quer zur feststehenden Fensterplatte 2 zu sehr beweglich ist. Dies macht einen instabilen und daher qualitativ geringwertigen Qualitätseindruck und kann die störungsfreie Funktion beeinträchtigen. Gleiches gilt sinngemäß auch für sonstige auf die Führungsschiene einwirkende Kräfte, die beispielsweise zu einer Tordierung der Führungsschiene führen könnten.

Um die gewünschte Stabilität zu erreichen, ist bei der oberen Führung 4a ein aus Figur 2 und Figur 3 ersichtliches, schwenkbewegliches Zwischenglied vorgesehen, über das die Führungsschiene 6 und die Haltevorrichtung 5 miteinander gekoppelt sind. Bei dem Zwischenglied handelt es sich um einen Schwenkbügel 7, der mittels eines Lagerbolzens 8 an der Haltevorrichtung 5 schwenkbar gelagert ist. Gleichzeitig greift der Schwenkbügel 7 über einen Steuerbolzen 9 in eine an der Führungsschiene 6 vorgesehene Steuernut 10 ein und ist somit relativ zur Führungsschiene sowohlverschwenkbar als auch verschieblich.

In Figur 3 ist die Position der Führungsschiene 6 und des Schwenkbügels 7 in Öffnungsstellung des Schiebefensters in durchgezogenen Linien und die Position der Führungsschiene 6 und des Schwenkbügels 7 in Schließstellung des Schiebefensters in gestrichelten Linien dargestellt.

Verlagert sich die Führungsschiene 6 relativ zur Haltevorrichtung 5 in Folge einer Öffnungsbewegung des Schiebefensters, wird der Schwenkbügel 7 um die Lagerbolzenachse verschwenkt und der Steuerbolzen 9 gleitet in der Steuernut 10 entlang bis er am Nutende anschlägt. Dieser Anschlag verhindert eine weitere Verlagerung der Führungsschiene 6 und bildet somit eine effektive Öffnungsmaßbegrenzung.

Um den bevorzugt als verwindungssteifes Stahlformteil hergestellten Schwenkbügel 7 mit seinen daran angeordneten Steuerbolzen 9 in die Steuernut 10 einführen zu können, geht der Steuernut 10 eine Montagehilfe voraus. Die Montagehilfe ist in Figur 3 beispielhaft von einer Montagenut 11 gebildet, die randseitig zugänglich ist und über die der Steuerbolzen 9 in die Steuernut 10 überführt werden kann. Befindet sich das Schiebefenster in Schließstellung, ist durch die Länge der Steuernut 10 sichergestellt, dass der Steuerbolzen 8 nicht aus der Steuernut 10 herausgleiten kann.

In Figur 3 ist weiter erkennbar, dass die Haltevorrichtung 5 die Führungsschiene 6 seitlich derart übergreift, dass sich selbst dann, wenn das maximale Öffnungsmaß erreicht ist, kein von außen zugänglicher Spalt zwischen Haltevorrichtung 5 und Führungsschiene 6 bildet. Diese besonders vorteilhafte Abstimmung der Führungsschiene 6 und der Haltevorrichtung 5 aufeinander ist optional und in den übrigen Figuren nicht dargestellt.

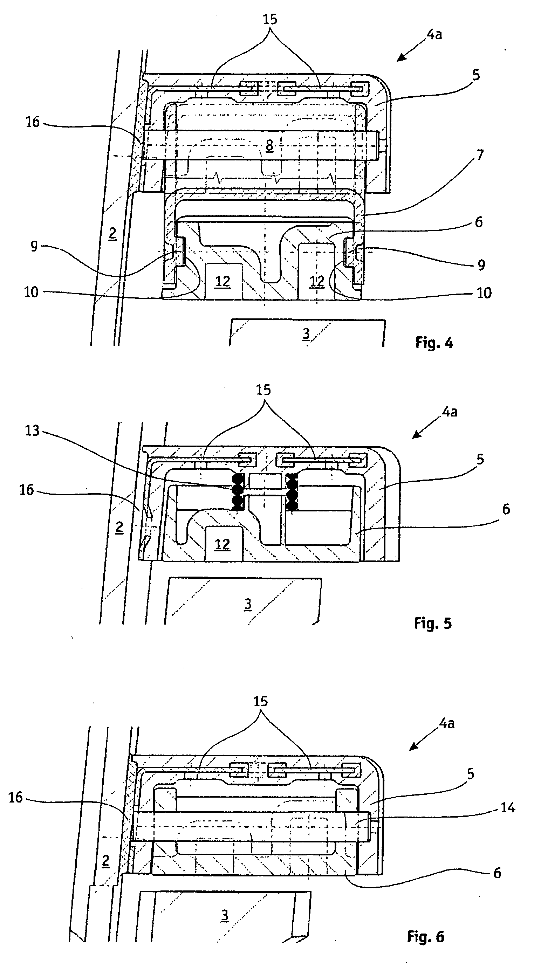

Wie aus Figur 4, die die Schnittansicht entlang der in Figur 3 eingezeichneten Schnittlinie B - B zeigt, ist der Schwenkbügel 7 als U-Bügel ausgebildet, umgreift die Führungsschiene 6 beidseitig der in der Führungsschiene 6 vorgesehenen Führungsnuten 12 und steht auch auf beiden Seiten der Führungsschiene 6 mit dieser über Steuerbolzen 9 und Steuernuten 10 in Eingriff. Außerdem liegt der Schwenkbügel 7 innenseitig eng und möglichst spielfrei an der Haltevorrichtung 5 an und ist zwecks schwenkbarer Lagerung an der Haltevorrichtung von dem Lagerbolzen 8 durchdrungen. Die U-förmige Ausgestaltung des Schwenkbügels 7 macht nicht nur den Schwenkbügel 7 als solchen besonders verwindungssteif, sie ermöglicht außerdem die besonders steife und wenig torsionsanfällige Kopplung von Führungsschiene 6 mit der Haltevorrichtung 5.

Gleichzeitig gewährleistet die U-förmige Ausgestaltung des Schwenkbügels, dass der Schwenkbügel in die Haltevorrichtung und die Führungsschiene in den Schwenkbügel eintauchen können, so dass die Bauteile Platz sparend und optisch vorteilhaft ineinander liegen, wenn sich das Schiebefensterin Schließstellung befindet.

Die Erfindung beschränkt sich selbstverständlich nicht auf die in den Figuren beispielhaft dargestellte Ausführungsform. Die Schwenkbügel können auch innenseitig an einer Führungsschiene und/oder außenseitig an der Haltevorrichtung angreifen. Ebenso ist es möglich, dass die Steuernut am Schwenkbügel und ein Steuerbolzen an der Führungsschiene vorgesehen ist.

Ebenfalls nicht gezeigt ist eine Ausführungsform, bei der der Schwenkbügel 7 durch ein Vorspannelement vorgespannt ist, so dass er entweder die Führungsschiene in die Haltevorrichtung hineinzieht oder die Führungsschiene gegen das Schiebefenster drückt. Ein solches Vorspannelement kann zum Beispiel als Biegefeder um den Lagerbolzen 8 gelegt sein und sich gegen das Zwischenelement sowie gegen die Haltevorrichtung 5 oder die Führungsschiene abstützen.

Figur 5 zeigt eine Schnittansicht der in Figur 1 dargestellten oberen Führung 4a entlang der Schnittlinie C - C. An der Führungsschiene 6 ist oberseitig und an der Haltevorrichtung 5 ist unterseitig jeweils ein Zentrierdorn für ein Vorspannelement in Form einer Andrückfeder 13 vorgesehen, die die Führungsschiene 6 gegen das Schiebefenster 3 anstellt, so dass das Schiebefenster 3 und Führungsschiene 6 jederzeit in definierter Anlage zueinander stehen.

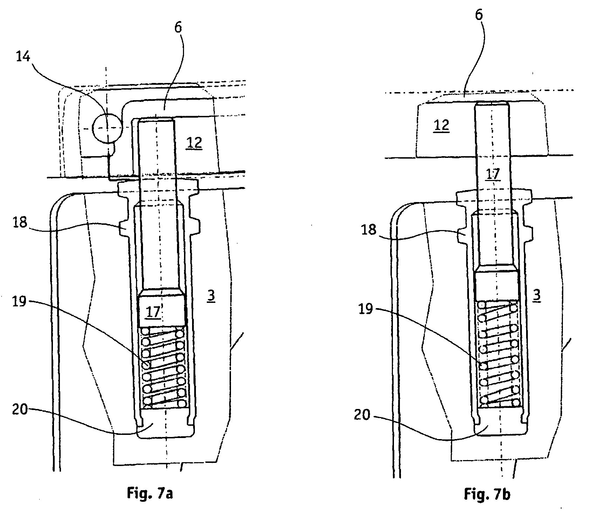

Wie aus Figur 5 und auch aus Figur 1 und Figur 2 ersichtlich ist die obere Führung 4a bevorzugt derart aufgebaut, dass die Führungsschiene 6 am vorderen Ende über das Zwischenglied und am hinteren Ende über einen Schwenkbolzen 14 an der Haltevorrichtung angelenkt ist. Aufgrund des Schwenkbolzens 14, der lediglich eine reine Schwenkbewegung der Führungsschiene zulässt, öffnet sich die Führung 4a bei Verschieben des Schiebefensters scherenartig. Ein solcher Schwenkbolzen ist wegen seiner Einfachheit und der hohen Stabilität der Verbindung zwischen Führungsschiene 6 und Haltevorrichtung vorteilhaft. Es ist aber ebenso möglich, dass anstelle der in Figur 5 gezeigten Lagerung über einen Schwenkbolzen die Führungsschiene 6 an mehreren Stellen, insbesondere am vorderen und hinteren Ende, über mehrere Zwischenglieder mit der Haltevorrichtung verbunden ist. Dies hätte den Vorteil, dass sich die Führungsschiene 6 nicht nur in einer reinen Schwenkbewegung um den Schwenkbolzen gegenüber der Haltevorrichtung verlagern könnte, sondern sich auch und gleichzeitig im Ganzen relativ zur Haltevorrichtung nach unten verschieben könnte. Dies würde die weiter unten zu Figuren 7a und 7b beschriebenen Ausgleichsvorrichtungen am Schiebefenster entbehrlich machen.

Figuren 4 bis 6 zeigen, dass die Haltevorrichtung 5 als längliches und/oder U-förmiges Profilteil aus Kunststoff ausgebildet sein kann, in dem Blecheinleger 15 eingebettet sind, die für zusätzliche Stabilität sorgen. Die Haltevorrichtung wird bevorzugt über eine Klebung 16 innenseitig mit der feststehenden Fensterplatte 2 verbunden, kann aber auch an anderen, fest mit der Karosserie verbundenen Bauteilen oder an der Karosserie selbst angeordnet sein.

Die Haltevorrichtung muss sich nicht notwendigerweise, wie insbesondere in Figur 1 und Figur 2 gezeigt, als längliches Profil über die gesamte Länge der Führungsschiene erstrecken, sondern kann auch mehrere, in Abstand zueinander angeordneten Haltevorrichtungen umfassen. Die Ausbildung der Haltevorrichtung als längliches, sich über die gesamte Länge der Führungsschiene erstreckendes Profilteil ermöglicht aber, dass die Führungsschiene über Ihre gesamte Länge in die Haltevorrichtung eintauchen kann. Dies ist aus optischen Gründen wünschenswert, denn so lässt sich der mehrteilige Aufbau der Führung von außen nicht ohne weiteres erkennen.

Das Schiebefenster wirkt sowohl vorne als auch hinten mittels Führungselementen mit der Führungsschiene zusammen. Aufgrund der von der Andrückfeder 13 auf die Führungsschiene 6 ausgeübten Federkraft ist die Führungsschiene 6 gegen den vorderen Teil des Schiebefensters angestellt und schwenkt während der Öffnungsbewegung des Schiebefensters 3 nach unten. Der Abstand der Führungsschiene gegenüber dem vorderen Teil des Schiebefensters und den in diesem Bereich angeordneten Führungselementen ändert sich also während der Öffnungsbewegung nicht in funktionserheblicher Weise. Lediglich der Winkel zwischen Führungsschiene und Schiebefensteroberkante ändert sich geringfügig, jedoch nicht in einem die Funktion der Führungselemente beeinflussenden Ausmaß. Im hinteren Teil des Schiebefensters ändert sich hingegen der Abstand erheblich, wie aus Figur 1 und Figur 2 ersichtlich.

Um trotz dieser Abstandsänderung zu gewährleisten, dass die Führungselemente störungsfrei mit der Führungsschiene zusammenwirken, sind diese am Schiebefenster 3, also entweder unmittelbar in bzw. an der Schiebefensterscheibe selbst oder in bzw. an einem Rahmenelement, das als Teil des Schiebefensters 3 mit der Schiebefensterscheibe verbunden ist, angeordnet und derart ausgestaltet, dass die Führungselemente die Abstandsänderung auszugleichen vermögen.

Wie aus Figuren 7a und 7b ersichtlich, sind die Führungselemente bevorzugt als Führungsstifte 17 ausgebildet, die federbelastet in einer Aufnahme, beispielsweise in Form der in den Figuren dargestellten Hülse 18, aufgenommen sind. Während der Führungsstift 17 in Figur 7a die Stellung in Schließstellung des Schiebefensters 3 wiedergibt, zeigt Figur 7b denselben Führungsstift 17 in Öffnungsstellung des Schiebefensters 3, in der die Druckfeder 19 gegenüber der in Figur 7a gezeigten Situation weiter entspannt und der Führungsstift 17 weiter aus der Hülse 18 hervorsteht, um trotz des größeren Abstands zum Nutgrund der Führungsnut 12 gleich tief in die Führungsnut 12 einzugreifen.

Der Führungsstift 17 ist bevorzugt ein Stahlstift und die Hülse 18 ist bevorzugt eine Stahlhülse, die an ihrem unteren Ende nach unterseitigem Einführen des Führungsstifts 17 und der Druckfeder 19 mit einer Verschlusskappe 20 verpresst ist.

Die Hülse 18 samt Führungsstift 17, Druckfeder 19 und Verschlusskappe 20 ist bevorzugt innerhalb eines Kunststoffteils eingebettet bzw. von diesem umspritzt, das innenseitig am Schiebefenster befestigt, insbesondere angespritzt ist. Das Kunststoffteil kann insbesondere von einer Leiste gebildet sein, die sich über einen Teil des Umfangs des Schiebefensters erstreckt, beispielsweise entlang der oberen und/oder unteren Schiebefensterkante. Es kann sich aber auch um einen Rahmen handeln, der sich entlang des gesamten Umfangs des Schiebefensters erstreckt.

### Bezugeiszeichenliste

- 1: Schiebefensterbaugruppe
- 2: feststehende Fensterplatte
- 3: bewegliches Schiebefenster
- 4a: obere Führung
- 4b: untere Führung
- 5: Haltevorrichtung
- 6: Führungsschiene
- 7: Schwenkbügel
- 8: Lagerbolzen
- 9: Steuerbolzen
- 10: Steuernut
- 11: Montagenut
- 12: Führungsnut
- 13: Andrückfeder
- 14: Schwenkbolzen
- 15: Blecheinleger
- 16: Klebung
- 17: Führungsstift
- 18: Hülse
- 19: Druckfeder
- 20: Verschlusskappe

## Patentansprüche

1. Schiebefensterführung für eine Schiebefensterbaugruppe (1) eines Kraftfahrzeugs, insbesondere eines Personenkraftwagens, mit nicht parallelen Führungen (4a, 4b), umfassend eine Führungsschiene (6) und eine Haltervorrichtung (5), mit der die Führungsschiene (6) über eine Ausgleichslagerung derart beweglich verbunden ist, dass die Ausgleichslagerung eine sich beim Verschieben des Schiebefensters (3) einstellende Verlagerung der Führungsschiene (6) auszugleichen vermag, **dadurch gekennzeichnet, dass**
die Ausgleichslagerung zumindest ein schwenkbewegliches Zwischenglied (7) umfasst, das schwenkbar an der Führungsschiene (6) und der Haltervorrichtung (5) angelenkt ist und die Führungsschiene (6) stabilisierend mit der Haltevorrichtung (5) verbindet und auf die Führungsschiene (6) wirkende Querkräfte und/oder Torsionskräfte wirksam aufzunehmen vermag.

2. Schiebefensterführung nach Anspruch 1, **dadurch gekennzeichnet, dass** das Zwischenglied (7) derart an Haltevorrichtung (5) und Führungsschiene (6) angelenkt ist, dass es gegenüber einem der Bauteile rein schwenkbar und gegenüber dem jeweils anderen Bauteil schwenkbar und verschieblich ist.

3. Schiebefensterführung nach einem der vorhergehenden Ansprüche, **dadurch gekennzeichnet, dass** das Zwischenglied (7) als Schwenkbügelausgebildetist.

4. Schiebefensterführung nach einem der vorherigen Ansprüche, **dadurch gekennzeichnet, dass** das Zwischenglied (7) an der Haltevorrichtung (5) rein schwenkbar und an der Führungsschiene (6) derart angelenkt ist, dass es dieser gegenüber verschieblich und verschwenkbar ist.

5. Schiebefensterführung nach einem der vorherigen Ansprüche, **dadurch gekennzeichnet, dass** das Zwischenglied (7) mit dem Bauteil, an dem es verschwenkbar und verschieblich angelenkt ist, über Steuermittel (9, 10) zusammenwirkt.

6. Schiebefensterführung nach dem vorhergehenden Anspruch, **dadurch gekennzeichnet, dass** die Steuermittel (9, 10) von einer Steuernut (10) und einem Steuerbolzen (9) gebildetsind.

7. Schiebefensterführung nach einem der beiden vorhergehenden Ansprüche, **dadurch gekennzeichnet, dass** eine Montagenut (11) vorgesehen ist, die in die Steuernut (10) überführt ist.

8. Schiebefensterführung nach einem der vorhergehenden Ansprüche, **dadurch gekennzeichnet, dass** das Zwischenglied (7) beidseitig an der Führungsschiene (6), insbesondere beidseitig einer in der Führungsschiene (6) vorgesehenen Führungsnut (12), an der Führungsschiene (6) angelenkt ist.

9. Schiebefensterführung nach dem vorhergehenden Anspruch, **dadurch gekennzeichnet, dass** der Querschnittsverlauf des Zwischenglieds (7) derart ausgebildet ist, dass sich Zwischenglied (7), Führungsschiene (6) und Haltevorrichtung (5) in Schließstellung des Schiebefensters ineinander legen können.

10. Schiebefensterführung nach einem der vorhergehenden Ansprüche, **dadurch gekennzeichnet, dass** das Zwischenglied (7) zumindest zum Teil einen U-förmigen Querschnitt und zwei die Führungsschiene (6) umgreifende Schenkel aufweist.

11. Schiebefensterführung nach einem der vorhergehenden Ansprüche, **dadurch gekennzeichnet, dass** Führungsschiene (6) und Haltevorrichtung (5) derart weit ineinander greifen, dass auch bei maximaler Verlagerung der Führungsschiene (6) relativ zur Haltevorrichtung (5) die Führungsschiene (6) von der Haltevorrichtung (5) spaltfrei teilverdecktist.

12. Schiebefensterführung nach dem vorhergehenden Anspruch, **dadurch gekennzeichnet, dass** die Haltevorrichtung (5) die Führungsschiene (6) außenseitig mit einem Profilschenkel umgreift und die Führungsschiene (6) selbst bei maximalem Öffnungsmaß noch zumindest teilweise in die Haltevorrichtung eintaucht.

13. Schiebefensterführung nach einem der vorhergehenden Ansprüche, **dadurch gekennzeichnet, dass** die Querschnitte der Haltevorrichtung (5) und der Führungsschiene (6) zumindest abschnittsweise derart aufeinander abgestimmt sind, dass die Führungsschiene (6) in Schließstellung des Schiebefensters (3) zumindest abschnittsweise spielfrei in der Haltevorrichtung (5) gehalten ist.

## Claims

1. A sliding window guide for a sliding window assembly (1) of a motor vehicle, in particular of a passenger car, with non-parallel guides (4a, 4b), comprising a guide rail (6) and a holding device (5) with which the guide rail (6) is movably connected via an equalizing bearing such that the equalizing bearing is capable of equalizing a displacement of the guide rail (6) which occurs on the shifting of the sliding window (3), **characterized in that**
the equalizing bearing comprises at least one pivotably movable intermediate member (7), which is pivotably articulated on the guide rail (6) and the holding device (5)and connects the guide rail (6) in a stabilizing manner with the holding device (5) and is capable of effectively receiving transverse forces and/or torsion forces acting on the guide rail (6).

2. The sliding window guide according to Claim 1, **characterized in that** the intermediate member (7) is articulated on holding device (5) and guide rail (6) such that it is purely pivotable with respect to one of the components and pivotable and displaceable with respect to the respective other component.

3. The sliding window guide according to one of the preceding claims, **characterized in that** the intermediate member (7) is constructed as a pivot bracket.

4. The sliding window guide according to one of the preceding claims, **characterized in that** the intermediate member (7) is purely pivotable on the holding device (5) and is articulated on the guide rail (6) such that it is displaceable and pivotable with respect thereto.

5. The sliding window guide according to one of the preceding claims, **characterized in that** the intermediate member (7) cooperates via control means (9, 10) with the component on which it is pivotably and displaceably articulated.

6. The sliding window guide according to the preceding claim, **characterized in that** the control means (9, 10) are formed by a control groove (10) and a control bolt (9).

7. The sliding window guide according to one of the two preceding claims, **characterized in that** an assembly groove (11) is provided, which is carried over into the control groove (10).

8. The sliding window guide according to one of the preceding claims, **characterized in that** the intermediate member (7) is articulated on the guide rail (6) on both sides on the guide tail (6), in particular on both sides of a guide groove (12), provided in the guide rail (6).

9. The sliding window guide according to the preceding claim, **characterized in that** the cross-sectional course of the intermediate member (7) is constructed such that intermediate member (7), guide rail (6) and holding device (5) can be placed into one another in closed position of the sliding window.

10. The sliding window guide according to one of the preceding claims, **characterized in that** the intermediate member (7) has at least partially a U-shaped cross-section and two legs encompassing the guide rail (6).

11. The sliding window guide according to one of the preceding claims, **characterized in that** guide rail (6) and holding device (5) engage into one another to such an extent that even in the case of maximum displacement of the guide rail (6) relative to the holding device (5), the guide rail (6) is partially covered by the holding device (5) without a gap.

12. The sliding window guide according to the preceding claim, **characterized in that** the holding device (5) encompasses the guide rail (6) on the outer side by a profile leg and the guide rail (6) still dips at least partially into the holding device even in the case of a maximum degree of opening.

13. The sliding window guide according to one of the preceding claims, **characterized in that** the cross-sections of the holding device (5) and of the guide rail (6) are coordinated with one another at least in sections such that the guide rail (6) in closed position of the sliding window (3) is held in the holding device (5) so as to be free of play at least in sections.

## Revendications

1. Glissière de vitre coulissante pour un module de vitre coulissante (1) d'un véhicule automobile, notamment d'une voiture particulière, comportant des glissières (4a,4b) non parallèles, comprenant un rail de guidage (6) et un dispositif de retenue (5), avec lequel le rail de guidage (6) est relié de manière mobile par l'intermédiaire d'un palier de compensation, de telle sorte que le palier de compensation permette de compenser un décalage du rail de guidage (6) s'établissant lors du coulissement de la fenêtre coulissante (3), **caractérisé en ce que** le palier de compensation comprend au moins un organe intermédiaire (7) mobile par pivotement, qui est raccordé par une articulation pivotante au rail de guidage (6) et au dispositif de retenue (5) et relie le rail de guidage (6) de manière stabilisatrice au dispositif de retenue (5) et permet d'absorber efficacement les forces transversales et/ou les forces de torsion agissant sur le rail de guidage (6).

2. Glissière de vitre coulissante selon la revendication 1, **caractérisée en ce que** l'organe intermédiaire (7) est raccordé articulation au dispositif de retenue (5) et au rail de guidage (6) de telle sorte qu'il soit purement basculable par rapport à un des composants et soit basculable et coulissant par rapport à l'autre composant respectif.

3. Glissière de vitre coulissante selon une des revendications précédentes, **caractérisée en ce que** l'organe intermédiaire (7) est conçu comme un étrier pivotant.

4. Glissière de vitre coulissante selon une des revendications précédentes, **caractérisée en ce que** l'organe intermédiaire (7) est raccordé par articulation de manière purement basculable au dispositif de retenue (5) et au rail de guidage (6), de telle sorte qu'il puisse être basculé et coulissé par rapport à ce dernier.

5. Glissière de vitre coulissante selon une des revendications précédentes, **caractérisé en ce que** l'organe intermédiaire (7) coopère avec le composant, auquel il est raccordé par articulation de manière basculable et coulissable, par l'intermédiaire de moyens de commande (9,10).

6. Glissière de vitre coulissante selon la revendication précédente, **caractérisée en ce que** les moyens de commande (9,10) sont formés par une rainure de commande (10) et un goujon de commande (9).

7. Glissière de vitre coulissante selon une des deux revendications précédentes, **caractérisée en ce que** une rainure de montage (11) est prévue, qui est convertie en rainure de commande (10).

8. Glissière de vitre coulissante selon une des revendications précédentes, **caractérisée en ce que** l'organe intermédiaire (7) est raccordé par articulation au rail de guidage (6) des deux côtés sur le rail de guidage (6), notamment des deux côtés d'une rainure de guidage (12) prévue dans le rail de guidage (6).

9. Glissière de vitre coulissante selon la revendication précédente, **caractérisé en ce que** le cours de section transversale de l'organe intermédiaire (7) est conçu de telle sorte que l'organe intermédiaire (7), le rail de guidage (6) et le dispositif de retenue (5) puissent venir reposer l'un dans l'autre dans la position de fermeture de la vitre coulissante.

10. Glissière de vitre coulissante selon une des revendications précédentes, **caractérisée en ce que** l'organe intermédiaire (7) présente au moins en partie une section transversale en forme de U et deux pans venant en prise autour du rial de guidage (6).

11. Glissière de vitre coulissante selon une des revendications précédentes, **caractérisée en ce que** le rail de guidage (6) et le dispositif de retenue (5) viennent en prise l'un dans l'autre jusqu'au point où également en présence d'un décalage maximal du rail de guidage (6) relativement au dispositif de retenue (5), le rail de retenue (6) est partiellement recouvert sans interstice par le dispositif de retenue (5).

12. Glissière de vitre coulissante selon la revendication précédente, **caractérisée en ce que** le dispositif de retenue (5) vient en prise autour du rail de guidage (6) du côté extérieur par un pan de profilé et le rail de guidage (6) même en présence d'une proportion d'ouverture maximale plonge au moins partiellement dans le dispositif de retenue.

13. Glissière de vitre coulissante selon une des revendications précédentes, **caractérisée en ce que** les sections transversales du dispositif de retenue (5) et du rail de guidage (6) sont harmonisées les unes aux autres au moins sur des portions, de telle sorte que le rail de guidage (6) dans la position de fermeture de la vitre de fenêtre (3) soit maintenu au moins sur des portions sans jeu dans le dispositif de retenue (5).
